# EUROPEAN PATENT APPLICATION

(11) **EP 1 056 030 A2**
(43) Date of publication of application: **29.11.2000**
(21) Application number: 00304124.1
(22) Date of filing: 16.05.2000
(51) Int. Cl.: G06F 17/60

(54) **Vending systems for a network printing environment**

(30) Priority: 26.05.1999 US 135884 P; 07.02.2000 US 499223
(71) Applicant: Xerox Corporation, Rochester, New York 14644 (US)
(72) Inventor: Cross, David H., Cambridge CB4 1LF (GB); Mande, Manisha A., Rochester, NY 14623 (US); Muto, Steve, Irvine, CA 92620 (US); Samie, Laden, Pittsford, NY 14534 (US); Carranza, George, Pittsford, NY 14534 (US); Wooten, Edward C., Pittsford, NY 14534 (US); Witte, John C., Rochester, NY 14625 (US); Buck, Kenneth J., Webster, NY 14580 (US); Acebo, Juan C., Ontario, NY 14519 (US); Nareppa, Ravi, Pittsford, NY 14534 (US); Pham, Tien, West Henrietta, NY 14586 (US); Moninger, Keith, Fairport, NY 14450 (US); Yang, Joseph, Anaheim, CA 92804-5009 (US); Walden, Rex S., Redondo Beach, CA 90278 (US); Inouye, Steve H., Cypress, CA 90630 (US); Dorward, Fiona, Puckeridge, Herts S911 1TE (GB); Trevor, John, Stevenage, Herts SG1 4NG (GB); Roche, Lee D., Biggleswade, Beds SG18 8TS (GB)
(74) Representative: Rackham, Stephen Neil

(57) **Abstract**

Computer users, possibly on a network, submit jobs to a digital printer (10), and then pay for the printing through a payment device (34), such as a currency acceptor or magnetic card reader, located at the printer (10). The submitted job data is retained at a memory (20) at the printer, and the cost of printing the job is calculated and displayed (32). The job is decomposed and output only in response to the payment device (34) receiving the cost of printing the job.

## Description

The present invention relates to a system for vending copies or prints, such as with a cash receptacle or a debit card reader, for use in the context of network digital printing.

Coin-operated copiers, as well as their equivalents which accept paper currency or tokens, or deduct a balance from a magnetic card, are well known in the "copy shop," public library, or educational environment. With these machines, a user inserts coins, or performs an equivalent operation, to pay for copies as they are made by the machine. The system works well with "light lens" or "analog" copiers wherein a customer must bring the physical original of a document to be copied to the copier, and then feed coins to the copier as individual pages in a set are output.

In the last few years, there has become common in office environments the concepts of "network printing" and "digital copying." Essential to either concept is the fact that "original" documents to be printed or copied exist not as a hard-copy original but in a pure software form, which may be brought to the printer either by a magnetic disk or over a network. With digital copiers, signals derived from an original hard-copy image are retained in a memory and then used to operate, typically, a laser printing or ink-jet apparatus. The image data from which copies are made exists, at one point or another, in electronic form. An example of a currently-available system which performs both digital copying and network digital printing is the "Document Centre™" systems available from Xerox Corporation. These machines can be considered "multi-function" machines, meaning the same basic hardware platform can be used for copying, digital printing, faxing, and scanning of an original hard-copy image into memory.

The present invention represents a system by which the general concept of "vending" copies, which is familiar in the analog or light-lens context, can be applied to a digital copying and/or network printing context.

U.S.-A-4,947,345 discloses a system for controlling various functions in a multi-function machine having copying, printing, and facsimile modes. The system includes a queue management process for printing the jobs in various orders.

U.S.-A-5,117,258 discloses a vending-machine type copier, wherein a size detector detects the size of a paper sheet being output. A copying fee is calculated based on the size and number of the sheets used.

U.S.-A-5,327,526 discloses a print job control system, for use in a digital printer or multi-function machine, which processes print requests to set an order of priority for printing print jobs. One feature allows changing the print order, thereby overriding the designated print option.

U.S.-A-5,619,024 discloses a vending control system whereby the operation of a copier is detected and recorded by a bank debit-card system or a credit card system.

According to the present invention, there is provided a method of operating a network printing system, the system including a computer for originating jobs to be printed and a printer for outputting the job, the printer having a memory and a payment device associated therewith. The job is sent from the computer to the printer. Image data associated with the job is stored in the memory. A name of the job is displayed on the display associated with the printer. In response to confirming payment for the cost of the job at the payment device, the image data for the job in the memory is output by the printer.

A particular embodiment in accordance with this invention will now be described with reference to the accompanying drawings; in which:-
Figure 1 is a systems diagram showing the essential elements of a digital copier incorporating the present invention, in the context of a network of client computers; and
Figures 2-4 are a series of flowcharts showing the operation of a system according to the present invention.

The overall concept of a system according to the present invention is as follows. Typically, a large number of computers, such as would be found in a copy shop, public library, or academic department, are connected by a network to share at least one central printer, and this printer may also serve as a copier as well, such as by the addition of an input scanner. As used herein, the term "computer" can be taken to mean any device which causes electronic data to be read for conversion to a printable form, and thus the term for present purposes could include a device such as a disk-drive, tape-drive, CD reader, fax device, palm-top personal device, etc. Further, as will be described below, a "computer" can also include an input scanner which converts hard copy images to image data. Users of the various computers can submit documents to the printer from any computer. When digital data corresponding to the document is sent to the central printer, the data is retained in a buffer controlled by the central printer until it is ready for printing by the printing hardware. However, once a document or "job" is submitted from one computer to the printer, it is intended that the user get up from the computer, go to the central printer, and submit payment to the central printer, in order to have the central printer output the job. Job names for all jobs in the buffer to be printed are displayed at the printer for manual selection. In this context a "payment device" associated with, and preferably physically proximate to, the central printer may be a coin acceptor, a paper currency acceptor, a magnetic card reader which deducts a fixed amount per print sheet from a balance stored on the card, or even a debit card or credit card reader; payment may be rendered in real money or according to some sort of intra-company accounting system. Only after payment has been satisfactorily accepted and confirmed in this way is the job data caused to operate the printer hardware to output the desired prints. Other functions resulting in paper output, such as the receipt of facsimiles or making of digital copies, can be incorporated into this general system, as well as the input scanning of hard-copy into an electronic database.

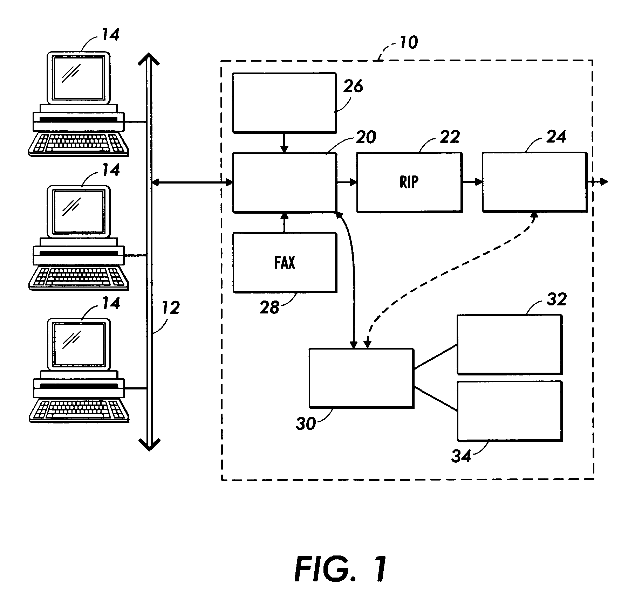

Figure 1 is a systems diagram showing the essential elements of a printer, digital copier, or multi-function device (hereinafter referred to as a "machine") generally indicated as 10 which interacts over a network 12 with any number of client computers such as indicated as 14. In a copy-shop or library context, any number of computers 14 may communicate with a single machine 10 for submission of print jobs thereto. In a practical embodiment, there may in fact be multiple machines 10 available on a network to any number of computers 14. Further, in lieu of or in addition to the elements shown, there may be provision to permit a user to physically carry electronic data, such as on a floppy disk, CD, or other medium, to the machine for printing, such as by inserting the disk in a specially-provided slot in the machine (not shown).

For purposes of describing the present invention, a machine 10 includes the following elements. Data representative of jobs to be printed are first retained in a buffer 20, typically in a form such as a page description language (for example, Adobe® PostScript™ or HP-PCL). As is common in digital printing devices, when it is desired to output pages based on data in the buffer, the data is drawn from buffer 20 through a raster image processor, or RIP, 22, which converts the page description language data into binary digital data which is directly operative of a print engine such as indicated as 24. As is well known, a print engine 24 is typically of the "laser printer" or ink-jet type, and would include, for purposes of the present description, not only the marking device but ancillary paper feeders, duplexers, and finishing devices such as sorters, staplers, or binders.

For purposes of the present description and claims, the term "job data" in itself can apply to either the data forming the images to be printed (the "file" or the "document") or the data telling the machine 10 how to output the data, such as how many sets to make, whether the sets are to be stapled or duplexed, etc. (the "job ticket").

For purposes of the present description, various elements within machine 10 are controlled by what is here called a "control" 30 which is basically computer hardware and software which enables the various elements to work together, as would be familiar in a digital multifunction device. Associated with control 30 is a queue display 32, which in this case is preferably a touch screen or equivalent, that is, a device which can both display in real time a list of jobs or files which are currently stored or queued within buffer 20, and which enables a user to indicate, such as by touching a screen, pushing a button, or manipulating a cursor, which individual job should be activated or advanced within the displayed queue. The idea of a queue display such as 32 within a machine 10 is already generally familiar in multi-function devices such as in the Xerox® Document Centre™ series of products.

Also associated with machine 10 through control 30 is what is here called a "payment device" 34. For purposes of the claims hereinbelow, a "payment device" shall be defined as a device which accepts a payment sufficient for causing the machine 10 to output print sheets. As such, the payment device 34 can be a coin acceptor, a currency acceptor, a magnetic card reader, a debit or credit card reader, or any equivalent device. The payment device 34 may be integral with machine 10 or resident in a separate, external "box."

Although the bulk of the following description will relate to the use of payment device 34 to enable a user to use machine 10 to output print jobs originating from a computer 14, it is also possible to incorporate with the machine 10 other sources of original images to be printed or copied. As is well known in commercially-available multi-function devices, both an input scanner 26 and a fax device such as 28 can be associated with machine 10 and provide image data to be stored in buffer 20 ultimately for printing by print engine 24.

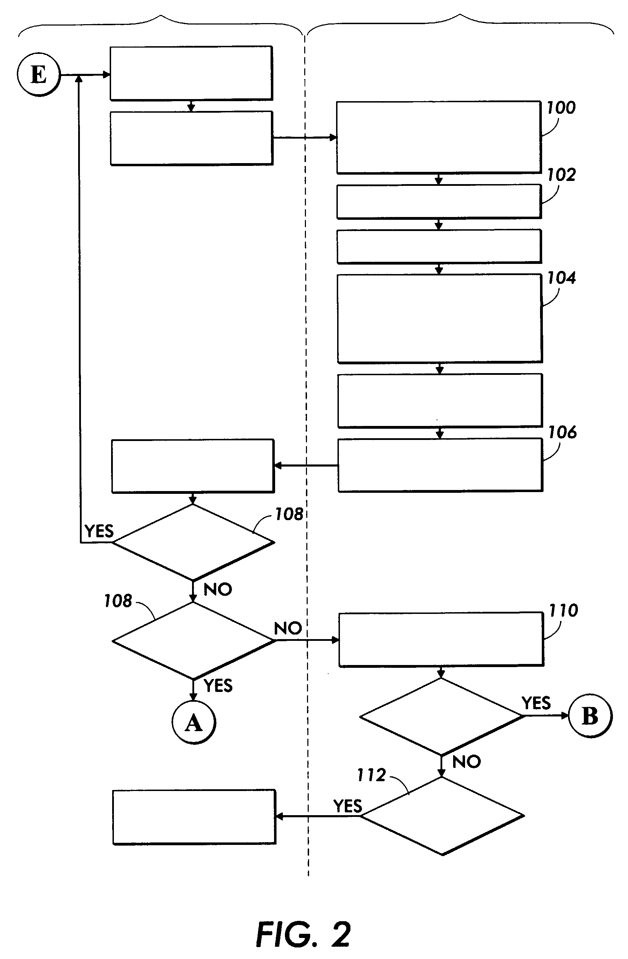

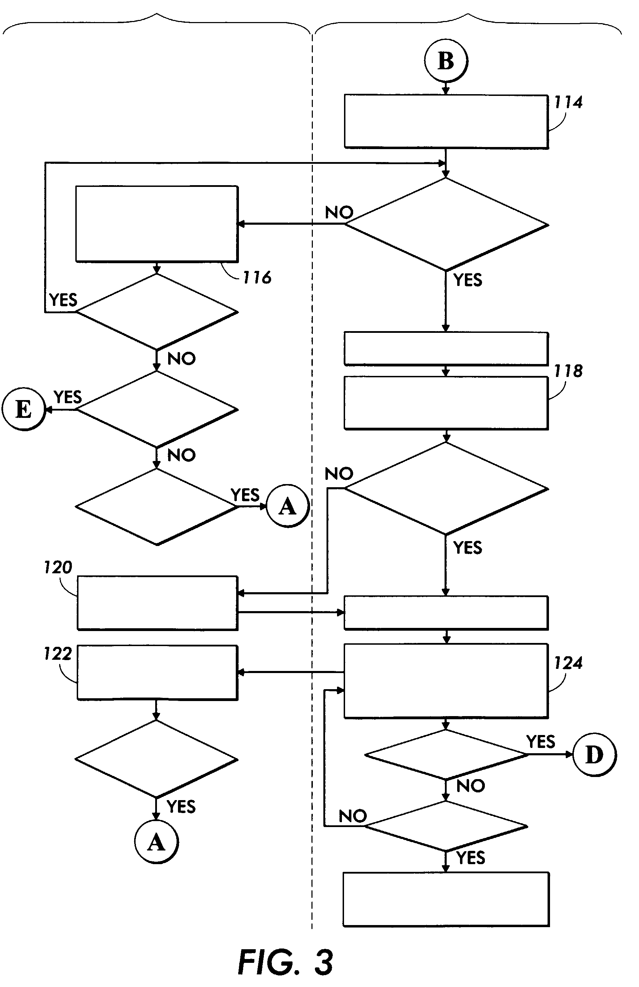

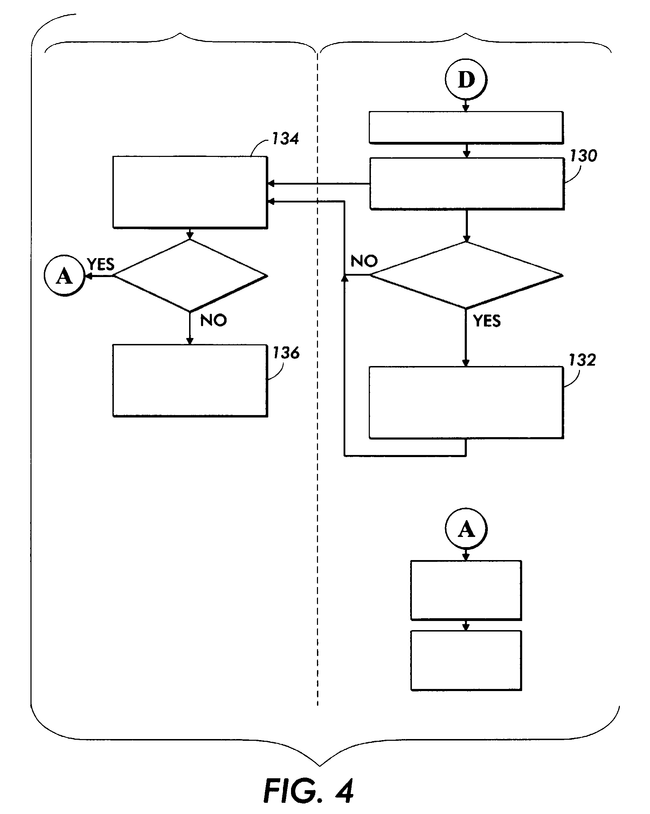

The following description accompanies Figures 2-4, which are a series of flow charts describing the interaction between a user, such as a computer 14, and the control 30 of a machine 10 according to a preferred embodiment of the present invention. However, it will be understood that certain details in the following description can readily be altered to fit certain technology requirements or business models, yet still remain within the scope of the claims below.

When a user at a computer 14 has a job to be printed by machine 10, the job being image data in the form of a PDL (page description language) file or equivalent such as TIFF, the user creates a "job ticket," which is a set of code which accompanies the file and includes instructions for the physical output of the job to be printed, such as the number of sets, the size and nature of the paper stock to be printed on, finishing options such as stapling, and so forth. The general idea of creating a job ticket, specifying print options, is well known from whenever print jobs are submitted to a digital printer. The job data (the image data to be printed, along with its job ticket) is then submitted from a computer 14 over network 12 to the machine 10. As shown at step 100, upon receipt of a job ticket, the control 30 causes the various elements of machine 10 to store the data for the job in the buffer 20, and send the job ticket data to software which manages the buffer 20, thus creating a queue of jobs in buffer 20 in a manner well known in the art, such as in the patents above.

Also, at some time after a job can be printed as initiated, the control 30 starts a "time out clock," such as shown at step 102 which will cause the machine 20 to hold the document in buffer 20 for a predetermined period of time until payment is accepted for printing, in a manner which will be described below. In the illustrated embodiment, the time out clock is started essentially immediately after receipt of the document, but the starting of the time out clock can occur at other times as well.

As shown at step 104, the control 30 reads the job ticket, and based on the job ticket and other data, determines the total cost of the job based on the number of pages, the number of sets in the job, the desired page size, a special finishing cost (such as for stapling or binding) and also a per-sheet cost which may vary by the type of user who has submitted a job to machine 10 (for instance, at a college, there may be a "faculty" rate which is different from a "student" rate).

As shown in step 106, once the total cost of the job proposed in the job ticket is calculated, a cost can be displayed to the user either at the user's computer 14, or at the queue display 32 on machine 10, or both. At this point there will be displayed to the user the options of canceling or reprogramming the job. As shown at step 108, if the user decides to reprogram the job, such as to make the job cheaper, the user is given the option of preparing a new job ticket with the original file (although not shown in the Figure, if reprogram is chosen, it will be understood that the file to be printed can remain in the buffer 20 while a new job ticket is prepared).

If the user, being apprised of the cost of the job, does not decide to reprogram or cancel the job, under the preferred embodiment of the present invention, the user must go to the machine 10, to pay for the job through payment device 34, and pick up the job from print engine 24. As shown at step 110, a name of the job, which has been supplied with the job ticket data, is displayed in a queue on the queue display 32 along with names of other jobs which are also stored in buffer 20 at the particular time. The user must submit payment for outputting the job to payment device 34 within a predetermined time limit (such as 5 or 30 minutes from original submission), or else the job will be cleared from the buffer 20 and the queue. As shown briefly at steps 112, once the originally-set time out clock reaches a predetermined warning time X, such as 5 minutes or 1 minute, there can be a pop-up display on the user's computer 14 or also on the queue display 32 in effect warning the user that he/she should either agree to pay for the output of the job submitted earlier, or else the job will be discarded.

As shown at step 114, under a preferred embodiment of the present invention, at one point or another in the job set up process, it is desired to display to the user what "premium options" (that is print options that add unusual cost) the user has selected, and give the user an option of reprogramming the job if necessary. The display of this option may occur before or, as shown, after some payment has been received by payment device 34. A check should be made if it is determined that sufficient funds were not submitted to payment device 34 to pay for the premium options: in such a case, as shown at step 116, there can be a display to the user (either at queue display 32 or at computer 14) the option to reprogram the job or add funds. The above-described comparing of the calculated cost of the job to an amount of funds that are available, with (in preferred embodiments) its attendant "negotiation" of offering the user to submit payment or reprogram the job, is described in the claims below as "confirming payment of a cost of the job."

Once the user and the control 30 have in effect agreed on what options will be purchased for the job being printed, the control 30 then checks, in a manner generally familiar in digital printing, to make sure that the print engine 24 is capable of completing the desired job. The various sensors can be used within print engine 24, in manners familiar in the art, to make sure, for example, that sufficient paper of a certain type to complete the job is loaded in machine 10; that sufficient marking material, such as toner or liquid ink, is available within print engine 24; and that there are no specific faults, such as paper jams, in print engine 24 at any given time. If, after this check, control 30 determines that it is incapable of completing the appointed job for whatever reason, a display to that effect is made on queue display 32 (it is assumed, by this time, that the user has made his payment and is still standing by machine 10). Although not shown in detail, at step 120 a relevant error message is displayed to the user if necessary, such as instructing the user to have more paper loaded into the machine 10, clear a specific jam, etc. in a manner generally familiar with automatic office equipment such as printers and copiers. Once the particular fault is satisfactorily cured at this point, the job set up process can be resumed.

Once payment has been received, and any particular faults identified and cured, the machine 10 can begin to output the desired job. Inevitably output of the desired job will require the processing of the data in buffer 20 by RIP 22 and output to print engine 24. Under a preferred embodiment of the invention, while pages are being output by print engine 24, there is displayed to the user through queue display 32 an option to abort the job at any time: thus, if the user finds that he has made a mistake and is not getting the expected output, he can simply push the abort button and thus minimize the number of wasted prints, as shown at step 122.

According to a preferred embodiment of the present invention, once a job is being output by print engine 24, a running signal is sent to control 30 (or to payment device 34) to maintain a count of output prints in real time as they are generated, and also to maintain a real-time decrementing of the amount of money being spent per page. Thus, even if the user has submitted cash to payment device 34, the amount of money he has actually spent on output prints is decremented in real time as prints are output; if an electronic payment system is used, such as a magnetic card or debit or credit card, the balance thereon is decremented on a per-page or per-side (for duplex prints) basis. In a preferred embodiment, the decrement occurs, or is triggered, when a printed sheet exits machine 10. Also shown at step 124 is a feature according to a preferred embodiment of the present invention, that while a particular user's job is being output, the user's computer is prevented from submitting another job.

There is of course a danger that a mechanical or software fault will occur within machine 10 while a job is being output. When such a fault is detected which causes the printing of a particular job to be stopped, it is important that the user has paid for those sets that were successfully completed, while sets which were incomplete at the time of the shutdown need not be paid for. Thus, if the job specified printing five twenty-page sets, and the fault occurred in the printing of the tenth page of the fifth set, the user will receive and have paid for the four completed sets, but not pay for any sheet in the incomplete fifth set. Thus, with reference to step 130, once a fault occurs, payment is accepted for all the completed sets, and then it is determined whether pages forming an incomplete set are still within machine 10; this capability is familiar in the art of high-volume copiers and printers. If an incomplete set exists within the machine at the time of fault, the printed sheets forming the incomplete set are preferably purged from the machine, such as to a purge tray, and in order to avoid the user having to pay for the incomplete set, the user's account is incremented to in effect refund the user for the sheets that had been paid for via the per-sheet or per-print decrementing of funds in step 124 (it should be noted that the details of this refund system will have to take into account whether simplex or duplex sheets were ordered, and whether the decrementing of funds were on a per-sheet or per-side basis). This purging and incrementing occurs at step 132.

Whether or not there is an incomplete set that must be purged and refunded, when a fault occurs in mid job, there is displayed to the user through queue display 32 a pop-up menu which gives the user the option of canceling the rest of the job, or resuming the job after the fault has been cleared as shown at step 132. If the user chooses to cancel the rest of the job, the document is removed from buffer 20 and from the queue; if the user chooses to continue the job later, preferably the document is retained in buffer 20 indefinitely, or until some long-term predetermined time out period such as 24 hours, and the job ticket is thus automatically revised by control 30 to output the remaining necessary sets when the fault is cleared, as shown at step 136.

If it is desired to use the above-described system as a "copier," that is, where the original images to be printed derive from a set of hard-copy originals, the source of image data from these originals can be obtained from input scanner 26 such as shown in Figure 1. Scanner 26 may be physically attached to the machine 10 or could exist on network 12; there could also be a number of scanners 26 associated (directly or over network 12) with one or more machines 10. In any case, for purposes of the claims below, in the "copier" model, a scanner such as 26 can in effect operate just like any other computer 14, acting as a source of image data, and (through a user interface such as queue display 32) as a source of job ticket data. Even when the source of the job data is a scanner, the above-described steps of confirming payment for a job can be carried out, so that copier functions can exist as a subset of the general printer functions of the system.

## Claims

1. A method of operating a printing system, the system including a computer for originating jobs to be printed and a printer for outputting the job, the printer having a memory, a display device, and a payment device associated therewith, comprising the steps of:
sending the job from the computer to the printer;
storing image data associated with the job in the memory;
displaying a name of the job on the display associated with the printer;
confirming payment for the cost of the job; and,
in response to confirming payment for the cost of the job, causing the image data for the job in the memory to be output by the printer.

2. A method of operating a printing system, the system including a computer for originating jobs to be printed and a printer for outputting the job, the printer having a memory, a display device, and a payment device associated therewith, comprising the steps of:
sending the job from the computer to the printer;
storing image data associated with the job in the memory;
displaying a name and the cost of the job on the display associated with the printer;
confirming payment for the cost of the job; and,
in response to confirming payment for the cost of the job, causing the image data for the job in the memory to be output by the printer.

3. A method according to claim 2, including calculating the cost of the job by determining one or more of the following:
determining a number of page images that must be output according to the job,
determining a number of sheets that must be output according to the job,
determining a sheet size that must be output according to the job,
determining a cost for a finishing step that must be output according to the job, and
determining a cost of outputting the job based on a type of user submitting the job.

4. A method according to any one of the preceding claims, wherein the confirming step includes comparing the calculated cost of the job to an amount of funds that are available.

5. A method according to claim 4, wherein the confirming step includes displaying to the user that the user may provide more funds.

6. A method according to any one of the preceding claims, further comprising the step of starting a time-out clock in response to the printer receiving a job from the computer and the step of the printer deleting data relating to a job in response to the time-out clock expiring before payment for the job is confirmed.

7. A method according to any one of the preceding claims, further comprising the steps of:
providing a user an opportunity to reprogram the job after the job was sent to the printer; and,
the printer retaining image data related to the job while the user reprograms the job.

8. A method according to any one of the preceding claims, further comprising the steps of:
detecting a fault in the printer resulting in the output of an incomplete job being output by the printer;
displaying an option to the user to cancel or continue a remainder of the job;
retaining the job data at the printer until the printer is capable of completing the job; and,
revising the job data to cause the printer to output the remainder of the job.
